# FASCICULE DE BREVET EUROPEEN

(11) **EP 1 966 435 B1**
(45) Date de publication et mention de la délivrance du brevet: **16.12.2009**
(21) Numéro de dépôt: 06847082.2
(22) Date de dépôt: 20.12.2006
(51) Int. Cl.: D21B 1/32

(54) **PROCEDE DE PREPARATION DE PATE A PAPIER A PARTIR DE PAPIERS RECYCLES CONTENANT DES CONTAMINANTS ET INSTALLATION POUR LA MISE EN OEUVRE DE PROCEDE**
VERFAHREN ZUR HERSTELLUNG EINER PAPIERFASERSTOFFSUSPENSION AUS VERUNREINIGUNGSHALTIGEM ALTPAPIER UND VORRICHTUNG ZUR DURCHFÜHRUNG DES VERFAHRENS
METHOD FOR PREPARING PAPER PULP FROM WASTE PAPER CONTAINING CONTAMINANTS AND APPARATUS FOR CARRYING OUT THE METHOD

(30) Priorité: 23.12.2005 FR 0513280
(43) Date de publication de la demande: 10.09.2008
(73) Titulaire: Georgia Pacific France, 68320 Kunheim (FR)
(72) Inventeur: COLIN, Philippe, F-68040 Ingersheim (FR); BERINGUET, Philippe, F-27110 Ecquetot (FR); GILLOT, Xavier, F-27000 Evreux (FR); TINEL, Jean-Yves, F-27400 Amfreville sur Iton (FR)
(74) Mandataire: Cortier, Sophie
(86) Numéro de dépôt international: PCT/FR2006/002802
(87) Numéro de publication internationale: WO 2007/077326

(56) Documents cités:
- GB-A- 2 161 091
- US-A- 4 708 295

## Description

L'invention concerne un procédé de préparation de pâte à papier à partir de papiers recyclés contenant des contaminants.

L'invention concerne également une installation destinée à la mise en oeuvre dudit procédé.

Bien avant que la communauté internationale décide de limiter l'accroissement des déchets industriels ou domestiques, néfastes à la fois pour l'environnement et l'économie, l'industrie papetière était attachée depuis de nombreuses années à recycler une partie de sa production.

Désormais, le recyclage des papiers ou cartons usagés permet de fournir une partie non négligeable des fibres cellulosiques utilisées pour la préparation des pâtes à papier.

Toutefois, malgré les moyens croissants mis en oeuvre à ce niveau, les volumes de papiers recyclés actuellement utilisables restent encore limités et ne permettent pas un approvisionnement suffisant pour répondre à la totalité des besoins à ce niveau. En effet, les installations de recyclage actuellement mises en oeuvre ne sont adaptées que pour traiter des papiers recyclés à faible taux de contaminant, notamment possédant un taux de contaminant inférieur à 15 %, et, de préférence, inférieur à 3 %.

En voulant étendre les sources d'approvisionnement en fibres aux papiers recyclés à fort taux de contaminant, notamment possédant un taux de contaminant supérieur à 15 %, on constate alors que les pâtes obtenues à partir de tels papiers recyclés présentent souvent une qualité moindre par rapport aux pâtes obtenues à partir de matériaux naturels et, de ce fait, s'avèrent inaptes à former des papiers de bonne qualité.
Ceci s'explique notamment par la présence au sein des pâtes de quantités non négligeables d'impuretés, lesquelles altèrent de manière importante les caractéristiques mécaniques ou physiques des papiers au final.

Or, il s'avère que la présence de ces impuretés dans la pâte tire généralement son origine du mauvais processus de séparation préalable entre les matériaux cellulosiques, d'une part, et les matériaux contaminants, d'autre part, des papiers à recycler. Par matériaux contaminants, il faut entendre à la fois des matériaux lourds, tels que des pièces métalliques, des pierres de taille et de forme diverses ou du sable, ou des matériaux légers, tels que des films plastiques, des ficelles ou de la colle.

Dans des techniques de recyclage relativement anciennes et désormais dépassées, cette étape de séparation s'opérait généralement en faisant passer un mélange d'eau et de papiers recyclés dans un appareil de désintégration de type pulpeur, au fond duquel avait été placée une grille perforée de trous. Toute particule ou matériau possédant une taille supérieure au diamètre des trous était donc retenue par la grille et, de la sorte, constituait la partie contaminante non utilisée des papiers recyclés.

Toutefois, ce processus de séparation présentait un certain nombre d'inconvénients.

D'une part, le risque était grand que la grille du pulpeur s'obstrue relativement rapidement du fait de l'accumulation des déchets. Il était donc nécessaire d'opérer un nettoyage régulier de la grille du pulpeur, ce qui entraînait des arrêts machines préjudiciables au processus de recyclage dans son ensemble.

D'autre part, il n'était pas rare qu'un taux relativement important de fibres cellulosiques potentiellement réutilisables soit retenu au niveau de la grille du pulpeur et, par la suite, éliminé avec les autres contaminants. - "

Il en résultait donc une perte en fibres relativement élevée et donc un rendement médiocre pour le procédé global de recyclage.

Par ailleurs, ces installations anciennes ne permettaient pas non plus d'obtenir un filtrage efficace des contaminants fins ou de petites tailles, lesquels étaient susceptibles de se retrouver dans la pâte au final.

Il était donc difficile d'obtenir une pâte de bonne qualité, c'est-à-dire sensiblement exempte de toute matière contaminante.

Pour remédier à ces inconvénients, il a été envisagé plus récemment de séparer l'étape de filtration de l'étape de brassage.

De la sorte, les installations de recyclage actuelles utilisent désormais des pulpeurs sans grille de filtrage, en particulier des pulpeurs à hélice de brassage dit pulpeur « hélico ».

De tels appareils ont notamment été décrits dans les demandes de brevets FR 2 493 364, FR 2 455 649, EP 0 126 632 ou EP 0 124 431.

Ce type de pulpeur comporte un moyen de brassage rotatif à axe vertical possédant une ou plusieurs pâles disposées en hélice autour de l'axe, lequel imprime à la matière un mouvement descendant axial suivi d'un mouvement centrifuge sur un fond lisse.

Avec ces appareils, le défibrage est réalisé par friction fibres sur fibres, la matière centrifugée étant projetée sur de la matière relativement immobile. Il se produit peu de déchiquetage et par suite les contaminants ou impuretés sont préservés et ne sont pas divisés, tandis que le papier est défibré.

Ces pulpeurs se contentent donc d'effectuer une remise en suspension des fibres de papiers en présence d'eau sans altérer ni les matériaux cellulosiques ni les contaminants.

La concentration obtenue dans ces pulpeurs est de l'ordre de 15 % en matières sèches.

Le mélange obtenu est ensuite envoyé vers un appareil de filtration séparé du pulpeur, lequel va effectuer l'opération de tri entre les matériaux cellulosiques réutilisables et les contaminants.

Divers appareils sont actuellement disponibles à ce niveau.

La Demanderesse a cependant constaté des résultats particulièrement intéressants en utilisant un appareil de filtration du type poire de vidange, notamment ceux conçus et réalisés par la société Kadant Lamort.

Un tel appareil de filtration se présente comme un volume clos, généralement cylindrique ou sensiblement cylindrique, comportant à l'intérieur une grille de séparation devant lequel se déplace un organe de nettoyage communément appelé « foil », cet organe ayant pour but d'empêcher que les contaminants ne viennent obstruer la grille. L'espace interne du volume situé en aval de la grille est par ailleurs soumis à une dépression au moyen d'une pompe par exemple.

Cette technologie présente toutefois des inconvénients sensiblement similaires à la technologie précédente.

En particulier, la grille de l'appareil de filtration du type poire de vidange peut se colmater au fur et à mesure des opérations de filtration. Ceci entraîne comme précédemment des arrêts machine pour cause de nettoyage et donc une perte de production, ainsi qu'une filtration moins fine et moins précise.

Ces inconvénients sont également accentués du fait que le volume de contaminants introduit au pulpeur est généralement supérieur à celui acceptable par unappareil de filtration du type poire de vidange.

L'augmentation sensible du taux de contaminant présent dans les papiers à recycler entraîne également inévitablement une accentuation concomitante des problèmes exposés précédemment.

L'obtention d'une certaine qualité de pâte à partir de sources de matières premières fortement contaminées nécessite donc actuellement d'accroître exagérément les étapes de filtration ou de limiter le rendement du procédé de recyclage.

Les installations actuelles, ainsi que les installations plus anciennes, ne sont donc plus adaptées pour fournir des pâtes de bonne qualité à partir de tels papiers recyclés, si l'on désire conserver, voire augmenter, les rendements de production et conserver, voire diminuer, les coûts de production.

Le document GB-A-2 161 091 décrit un procédé selon le préambule de la revendication 1 et une installation selon le préambule de la revendication 8.

L'invention se proprose donc de fournir un nouveau procédé de préparation de pâte à papier à partir de papiers recyclés ne présentant pas les inconvénients de l'art antérieur susmentionné, en particulier un procédé de préparation de pâte à papier capable de fournir une pâte à papier de bonne qualité à partir de papiers recyclés fortement contaminés.

A cet effet, et conformément à l'invention, il est proposé un procédé de préparation de pâte à papier à partir de papiers recyclés contenant des contaminants, remarquable en ce qu'il comprend les étapes successives suivantes :
i) une première étape de brassage du papier en présence d'eau afin d'obtenir un mélange de fibres et de contaminants en suspension,
ii) une seconde étape de tamisage grossier dudit mélange afin de séparer les contaminants grossiers du reste de la suspension, la première et la seconde étapes s'effectuant au moyen d'un pulpeur muni d'un moyen de brassage rotatif, dans lequel au moins une grille percée de trous grossiers est disposée sous ledit moyen de brassage rotatif,
iii) une troisième étape de tamisage fin afin de séparer les contaminants fins de la suspension grossièrement tamisée obtenue à l'étape (ii),
iv) une quatrième étape de lavage desdits contaminants grossiers et fins afin de séparer les matières fibreuses récupérables du reste des contaminants non récupérables, ladite étape étant effectuée au moyen d'un tambour de lavage comportant deux zones successives munies de trous sur au moins une partie de leur surface,
et en ce que les eaux de lavage issues de la première zone sont envoyées à un cuvier de mélange intermédiaire dans lequel est récupérée la suspension grossièrement tamisée avant son tamisage fin et les eaux de lavage de la deuxième zone, qui ont une teneur fibreuse inférieure à celle des eaux de lavage issues de la première zone, sont envoyées au pulpeur.

Dans un autre mode de réalisation de l'invention, la troisième étape s'effectue au moyen d'un appareil de filtration du type poire de vidange, à l'intérieur duquel est disposée une grille percée de trous fins.

Dans un autre mode de réalisation de l'invention, le diamètre des trous de la grille du pulpeur est supérieur au diamètre des trous de la grille de l'appareil de filtration du type poire de vidange et, de préférence, est au moins deux fois supérieur au diamètre des trous de la grille de l'appareil de filtration du type poire de vidange.

Dans un autre mode de réalisation de l'invention, le diamètre des trous de la grille du pulpeur est compris entre 8 et 15 mm, et, de préférence, est environ égal à 10 mm, et le diamètre des trous de la grille de l'appareil de filtration du type poire de vidange est compris entre 2 et 6 mm, et, de préférence environ égal à 4 mm.

Dans un autre mode de réalisation de l'invention, la première zone perforée du tambour possède des trous d'un diamètre d'environ 8 mm et la seconde zone perforée possède des trous d'un diamètre d'environ 10 mm.

Dans un autre mode de réalisation de l'invention, les contaminants grossiers et fins séparés lors des deuxième et troisième étapes sont collectés dans un réservoir de stockage avant d'être lavés.

Dans un autre mode de réalisation de l'invention, le papier recyclé possède un taux de contaminant à l'état sec supérieur ou égal à 15 % en poids.

Ainsi configurée, l'invention permettra donc de filtrer d'abord les contaminants lourds ou de grosses tailles au niveau du pulpeur, évitant ainsi les problèmes de colmatage de la grille de l'appareil de filtration du type poire de vidange, celle-ci se contentant de filtrer les contaminants plus fins ou plus petits.

L'invention porte également sur une installation destinée à la mise en oeuvre dudit procédé de préparation de pâte à papier ; ladite installation est remarquable en ce qu'elle comporte :
- un pulpeur équipé d'un moyen de brassage rotatif et d'une grille de tamisage, ledit pulpeur étant destiné à brasser le papier en présence d'eau afin d'obtenir un mélange de fibres et de contaminants en suspension et à effectuer un tamisage grossier dudit mélange afin de séparer les contaminants grossiers du reste de la suspension,
- un dispositif de tamisage additionnel de type poire de vidange, à l'intérieur duquel est disposée une grille percée de trous fins, ledit dispositif de tamisage additionnel étant destiné à effectuer un tamisage fin afin de séparer les contaminants fins de la suspension grossièrement tamisée,
- un cuvier de mélange intermédiaire pour récupérer la suspension grossièrement tamisée avant son tamisage fin,
- un tambour de lavage destiné à effectuer un lavage des contaminants grossiers et fins afin de séparer les matières fibreuses récupérables du reste des contaminants non récupérables, ledit tambour comportant deux zones successives munies de trous sur au moins une partie de leur surface,
- une conduite pour envoyer au cuvier de mélange intermédiaire les eaux de lavage issues de la première zone et une conduite pour envoyer au pulpeur les eaux de lavage issues de la deuxième zone qui ont une teneur fibreuse inférieure à celle des eaux de lavage issues de la première zone.

Selon une variante de l'invention, le diamètre des trous de la grille du pulpeur est supérieur au diamètre des trous de la grille du dispositif de tamisage additionnel et, de préférence, est au moins deux fois supérieur au diamètre des trous de la grille du dispositif de tamisage additionnel.

Selon, une autre variante de l'invention, le diamètre des trous de la grille du pulpeur est compris entre 8 et 15 mm, et, de préférence, est environ égal à 10 mm, et le diamètre des trous de la grille du dispositif de tamisage additionnel est compris entre 2 et 6 mm, et, de préférence environ égal à 4 mm.

Selon une autre variante de l'invention, une première zone du tambour possède des trous d'un diamètre d'environ 8 mm et une seconde zone du tambour possède des trous d'un diamètre d'environ 10mm.

D'autres avantages et caractéristiques ressortiront mieux de la description qui va suivre d'un procédé de préparation de pâte à papier selon l'invention, en référence aux dessins sur lesquels :

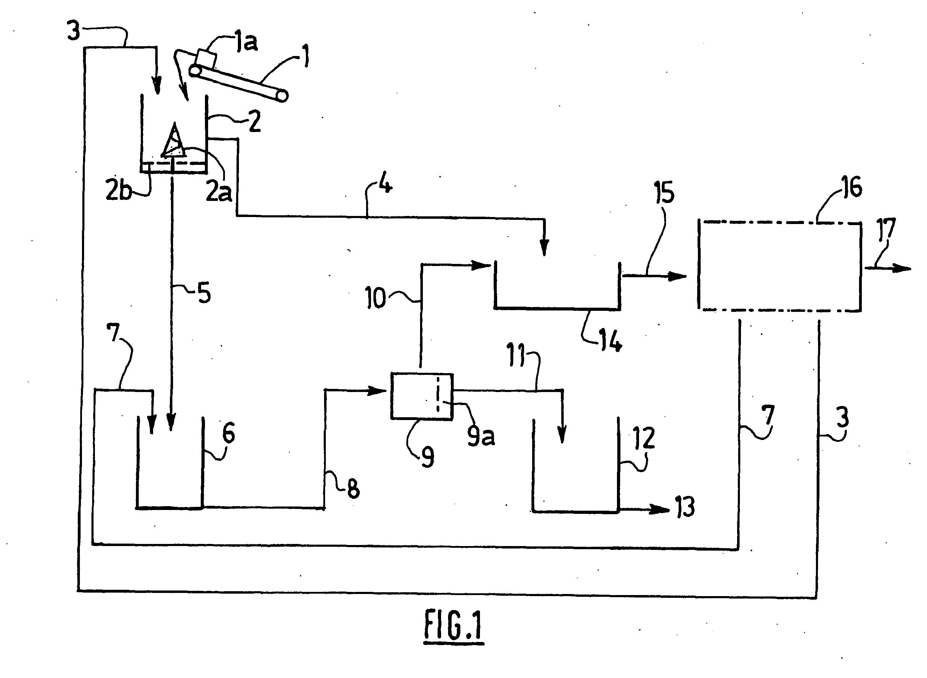

- la figure 1 est une représentation schématique d'une installation destinée à la mise en oeuvre du procédé selon la présente invention.

L'installation comprend en particulier un convoyeur 1 qui alimente en matériau à recycler 1a un appareil désintégrateur 2, du type pulpeur « hélico ». La concentration obtenue dans ce pulpeur est de l'ordre de 15 % en matières sèches.

Le matériau à recycler 1a se présente généralement sous forme de balles ou de papier en vrac comportant à la fois des matériaux cellulosiques réutilisables et des matériaux contaminants non réutilisables. Les matériaux contaminants peuvent à cet égard représenter plus de 15 % en poids dudit matériau. De manière générale, le matériau à recycler 1a pourra être choisi parmi les matériaux classés 2.06 ou 5.03 selon la norme EN 643, notamment les emballages carton pour liquides alimentaires du type Tetra Pak^{®} comportant des films plastiques et/ou métalliques.

Le pulpeur 2 comporte un rotor de brassage 2a centrifuge, en rotation autour d'un axe vertical et possédant au moins une pâle décrivant une hélice autour de cet axe vertical. Un tel rotor 2a n'effectue aucune séparation : il crée des forces de friction entre les constituants du matériau à recycler 1a, provoquant un détachement des encres et une désintégration des matériaux cellulosiques mais sans provoquer de désintégration des contaminants. Après avoir ajouté de l'eau de lavage dans le pulpeur 2 par l'intermédiaire de la conduite 3, on brasse donc ensuite le mélange eau de lavage/matériau à recycler au moyen du rotor 2a.

Une plaque d'extraction perforée 2b, ou grille 2b, placée au-dessous du rotor 2a permet alors d'opérer un premier tamisage grossier du matériau à recycler 1a. Dans une variante préférée de l'invention, la grille 2b possédera des trous de diamètre sensiblement égal à 10 mm.

Une conduite de décharge 4, ou une paroi amovible 4, disposée dans la partie basse du pulpeur 2, au-dessus de la grille 2b, permet d'évacuer les matériaux retenus par la grille 2b, correspondant à la fraction de pâte non tamisée, vers un réservoir de stockage 14. Cette fraction comporte en principe une forte proportion de contaminants et une faible proportion de matériaux cellulosiques potentiellement réutilisables.

Par ailleurs une conduite de décharge 5, débouchant dans la partie basse du pulpeur 2, au-dessous de la grille 2b, amène les matériaux non retenus par la grille 2b, correspondant à la fraction de pâte grossièrement tamisée, vers un cuvier de mélange intermédiaire 6. Cette fraction comporte notamment une quantité relativement importante de matériaux cellulosiques et une quantité normalement faible de contaminants.

De manière à optimiser au maximum le rendement du processus global de recyclage, il est donc procédé à une opération de filtration additionnelle à la fois sur la fraction de pâte non tamisée et sur la fraction de pâte grossièrement tamisée. Ces opérations vont notamment permettre d'intégrer dans la pâte le maximum de matériaux cellulosiques présents au départ dans le matériau à recycler et d'éliminer de la pâte la totalité ou la quasi-totalité des contaminants dudit matériau à recycler.

Dans un premier temps, la fraction de pâte grossièrement tamisée est envoyée au moyen d'une conduite 8 à un appareil de filtration 9 du type poire de vidange, lequel effectue un tamisage fin de ladite fraction. La grille, ou tamis 9a, de l'appareil de filtration du type poire de vidange 9 est, à cette fin, munie de trous de diamètre inférieur à celui des trous de la grille 2b du pulpeur 2. En particulier, lorsque le diamètre des trous de la grille 2b du pulpeur 2 est environ égal à 10 mm, celui des trous du tamis 9a de l'appareil de filtration du type poire de vidange 9 est environ égal à 4 mm.

De manière concomitante et à intervalles réguliers, la fraction de la pâte retenue par la grille 9a de l'appareil de filtration du type poire de vidange 9 est alors envoyée dans le réservoir de stockage 14, venant ainsi s'ajouter à la fraction de la pâte non tamisée retenue par la grille 2b du pulpeur 2.

A la sortie de l'appareil de filtration du type poire de vidange 9, la fraction de la pâte non retenue par la grille 9a, dite fraction de pâte finement tamisée, constitue donc la pâte potentiellement utilisable lors du processus aval de préparation de pâte à papier. Avant d'être soumis à des étapes optionnelles additionnelles 13 de tri et de séparation de fibres, la pâte ainsi obtenue est au préalable envoyée dans un cuvier de sortie 12 au moyen d'une conduite de décharge 11.

La fraction de pâte stockée au niveau du réservoir 14 est envoyée quant à elle au moyen d'une conduite 15 à l'intérieur d'un tambour de lavage 16, appelé communément trommel, lequel opère une séparation entre les matières fibreuses réutilisables et les contaminants non réutilisables. Ce tambour de lavage 16 fonctionne sur le principe d'un déplacement axial de pâte à l'intérieur d'un cylindre creux muni sur au moins une partie de sa surface de trous. Par l'effet de la force centrifuge, le mélange est brassé, agité et lavé, les fractions les plus fines de cette pâte passant au travers des trous, les fractions plus grossières restant à l'intérieur du cylindre. Dans une variante préférée de l'invention, le tambour 16 comporte selon sa direction axiale au moins une première zone perforée possédant des trous de diamètre d'environ 8 mm, et une deuxième zone perforée possédant des trous de diamètre d'environ 10 mm. Ainsi configuré, le tambour de lavage 16 s'est avéré en effet particulièrement efficace pour séparer les contaminants des matières cellulosiques encore présentes dans la fraction de pâte à traiter.

A la sortie du tambour de lavage 16, les eaux de lavage sont séparées : les eaux de la première zone, plus chargées en fibres, sont envoyées par une conduite 7 au cuvier de mélange 6 afin d'être à nouveau traitées par l'appareil de filtration du type poire de vidange 9, tandis que les eaux de la deuxième zone, moins chargées en fibres, sont renvoyées à la dilution du pulpeur 2 par la conduite 3. Les matières retenues à l'intérieur du tambour sont quant à elles rejetées hors de l'installation au moyen d'une goulotte de rejet 17 avant d'être compactées ou détruites.

Il est bien entendu que l'exemple de réalisation donné ci-dessous n'est nullement limitatif pour la présente invention, d'autres modifications ou ajouts d'étapes dans le procédé ou de dispositifs dans l'installation pouvant être envisagés sans sortir du cadre de l'invention, telle que définie dans les revendications.

## Revendications

1. Procédé de préparation de pâte à papier à partir de papiers recyclés contenant des contaminants, le procédé comprenant les étapes successives suivantes :
i) une première étape de brassage du papier en présence d'eau afin d'obtenir un mélange de fibres et de contaminants en suspension,
ii) une seconde étape de tamisage grossier dudit mélange afin de séparer les contaminants grossiers du reste de la suspension, la première et la seconde étapes s'effectuant au moyen d'un pulpeur (2) muni d'un moyen de brassage rotatif (2a), dans lequel au moins une grille (2b) percée de trous grossiers est disposée sous ledit moyen de brassage rotatif (2a), et
iii) une troisième étape de tamisage fin afin de séparer les contaminants fins de la suspension grossièrement tamisée obtenue à l'étape (ii),
**caractérisé en ce que** le procédé comprend une quatrième étape de lavage desdits contaminants grossiers et fins afin de séparer les matières fibreuses récupérables du reste des contaminants non récupérables, ladite étape étant effectuée au moyen d'un tambour de lavage (16) comportant deux zones successives munies de trous sur au moins une partie de leur surface,
et **en ce que** les eaux de lavage issues de la première zone sont envoyées à un cuvier de mélange intermédiaire (6) dans lequel est récupérée la suspension grossièrement tamisée avant son tamisage fin et les eaux de lavage de la deuxième zone, qui ont une teneur fibreuse inférieure à celle des eaux de lavage issues de la première zone, sont envoyées au pulpeur (2).

2. Procédé selon la revendication 1, **caractérisé en ce que** la troisième étape s'effectue au moyen d'un appareil de filtration du type poire de vidange (9), à l'intérieur duquel est disposée une grille (9a) percée de trous fins.

3. Procédé selon la revendication 2, **caractérisé en ce que** le diamètre des trous de la grille (2b) du pulpeur (2) est supérieur au diamètre des trous de la grille (9a) de l'appareil de filtration du type poire de vidange (9) et, de préférence, est au moins deux fois supérieur au diamètre des trous de la grille (9a) de l'appareil de filtration du type poire de vidange (9).

4. Procédé selon la revendication 3, **caractérisé en ce que** le diamètre des trous de la grille (2b) du pulpeur (2) est compris entre 8 et 15 mm, et, de préférence, est environ égal à 10 mm, et le diamètre des trous de la grille (9a) de l'appareil de filtration du type poire de vidange (9) est compris entre 2 et 6 mm, et, de préférence environ égal à 4 mm.

5. Procédé selon l'une quelconque des revendications précédentes, **caractérisé en ce que** la première zone du tambour (16) possède des trous d'un diamètre d'environ 8 mm et la deuxième zone du tambour (16) possède des trous d'un diamètre d'environ 10 mm.

6. Procédé selon l'une quelconque des revendications précédentes, **caractérisé en ce que** les contaminants grossiers et fins séparés lors des deuxième et troisième étapes sont collectés dans un réservoir de stockage (14) avant d'être lavés.

7. Procédé selon l'une quelconque des revendications précédentes, **caractérisé en ce que** le papier recyclé possède un taux de contaminant à l'état sec supérieur ou égal à 15 % en poids.

8. Installation destinée à la mise en oeuvre du procédé selon l'une quelconque des revendications précédentes, l'installation comportant
- un pulpeur (2) équipé d'un moyen de brassage rotatif (2a) et d'une grille de tamisage (2b), ledit pulpeur (2) étant destiné à brasser le papier en présence d'eau afin d'obtenir un mélange de fibres et de contaminants en suspension et à effectuer un tamisage grossier dudit mélange afin de séparer les contaminants grossiers du reste de la suspension, et
- un dispositif de tamisage additionnel de type poire de vidange (9), à l'intérieur duquel est disposée une grille (9a) percée de trous fins, ledit dispositif de tamisage additionnel (9) étant destiné à effectuer un tamisage fin afin de séparer les contaminants fins de la suspension grossièrement tamisée, **caractérisé en ce que** l'installation comporte
- un cuvier de mélange intermédiaire (6) pour récupérer la suspension grossièrement tamisée avant son tamisage fin,
- un tambour de lavage (16) destiné à effectuer un lavage des contaminants grossiers et fins afin de séparer les matières fibreuses récupérables du reste des contaminants non récupérables, ledit tambour (16) comportant deux zones successives munies de trous sur au moins une partie de leur surface, et
- une conduite (7) pour envoyer au cuvier de mélange intermédiaire (6) les eaux de lavage issues de la première zone et une conduite (3) pour envoyer au pulpeur (2) les eaux de lavage issues de la deuxième zone qui ont une teneur fibreuse inférieure à celle des eaux de lavage issues de la première zone.

9. Installation selon la revendication précédente, **caractérisée en ce que** le diamètre des trous de la grille (2b) du pulpeur (2) est supérieur au diamètre des trous de la grille (9a) du dispositif de tamisage additionnel (9) et, de préférence, est au moins deux fois supérieur au diamètre des trous de la grille (9a) dudit dispositif (9).

10. Installation selon la revendication précédente, **caractérisée en ce que** le diamètre des trous de la grille (2b) du pulpeur (2) est compris entre 8 et 15 mm, et, de préférence, est environ égal à 10 mm, et le diamètre des trous de la grille (9a) du dispositif de tamisage additionnel (9) est compris entre 2 et 6 mm, et, de préférence environ égal à 4 mm.

11. Installation selon l'une quelconque des revendications 8 à 10, **caractérisée en ce que** la première zone du tambour (16) possède des trous d'un diamètre d'environ 8 mm et la deuxième zone du tambour (16) possède des trous d'un diamètre d'environ 10 mm.

## Claims

1. Method for preparing paper pulp from recycled papers containing contaminants, the method comprising the following successive stages:
i) a first stage of stirring the paper in the presence of water in order to obtain a mixture of fibres and contaminants in suspension,
ii) a second stage of coarse screening of the said mixture, in order to separate the coarse contaminants from the rest of the suspension, the first and second stages being carried out by means of a pulper (2) with a propeller agitator, in which at least one grid (2b) pierced with large holes is positioned under the propeller agitator (2a), and
iii) a third stage of fine screening for separating the fine contaminants from the coarsely screened suspension obtained in stage (ii),
**characterized in that** the method comprises
a fourth stage of washing the said coarse and fine contaminants in order to separate the recoverable fibrous materials from the rest of the non-recoverable contaminants, the said stage being carried out by means of a washing drum (16) having at least two successive zones provided with holes over at least part of their surface,
and **in that** the washing water coming from the first zone is sent to an intermediate mixing chest (6) in which the coarsely screened suspension is collected before it is finely screened, and the washing water from the second zone, which has a lower fibre content than the washing water coming from the first zone, is sent to the pulper (2).

2. Method according to Claim 1, **characterized in that** the third stage is carried out by means of a filtration apparatus (9) of the dumping poire type, in which a grid (9a) pierced with fine holes is placed.

3. Method according to Claim 2, **characterized in that** the diameter of the holes of the grid (2b) of the pulper (2) is greater than the diameter of the holes of the grid (9a) of the dumping poire filtration apparatus (9), and is preferably at least twice as great as the diameter of the holes of the grid (9a) of the dumping poire filtration apparatus (9).

4. Method according to Claim 3, **characterized in that** the diameter of the holes of the grid (2b) of the pulper (2) is in the range from 8 to 15 mm, and is preferably approximately equal to 10 mm, and the diameter of the holes of the grid (9a) of the dumping poire filtration apparatus (9) is in the range from 2 to 6 mm, and is preferably approximately equal to 4 mm.

5. Method according to any one of the preceding claims, **characterized in that** the first zone of the drum (16) has holes with a diameter of approximately 8 mm and the second zone of the drum (16) has holes with a diameter of approximately 10 mm.

6. Method according to any one of the preceding claims, **characterized in that** the coarse and fine contaminants separated at the second and third stages are collected in a storage tank (14) before being washed.

7. Method according to any one of the preceding claims, **characterized in that** the recycled paper has a content of contaminant in the dry state greater than or equal to 15% by weight.

8. Installation intended for the application of the method according to any one of the preceding claims, the installation comprising
- a pulper (2) equipped with a propeller agitator and with a screening grid (2b), the said pulper (2) being designed to stir the paper in the presence of water so as to obtain a mixture of fibres and contaminants in suspension and to carry out coarse screening of the said mixture in order to separate the coarse contaminants from the rest of the suspension; and
- an additional screening device (9) of the dumping poire type, in which a grid (9a) pierced with fine holes is placed, the said additional screening device (9) being designed to carry out fine screening in order to separate the fine contaminants from the coarsely screened suspension;
**characterized in that** the installation comprises
- an intermediate mixing chest (6) for collecting the coarsely screened suspension before it is finely screened;
- a washing drum (16) designed to wash the coarse and fine contaminants in order to separate the recoverable fibrous materials from the rest of the non-recoverable contaminants, the said drum (16) having two successive zones provided with holes over at least part of their surface; and
- a pipe (7) for sending the washing water coming from the first zone to the intermediate mixing chest (6) and a pipe (3) for sending the washing water coming from the second zone, which has a lower fibre content than the washing water coming from the first zone, to the pulper (2).

9. Installation according to the preceding claim,
**characterized in that** the diameter of the holes of the grid (2b) of the pulper (2) is greater than the diameter of the holes of the grid (9a) of the additional screening device (9), and is preferably at least twice as great as the diameter of the holes of the grid (9a) of the said device (9).

10. Installation according to the preceding claim,
**characterized in that** the diameter of the holes of the grid (2b) of the pulper (2) is in the range from 8 to 15 mm, and is preferably approximately equal to 10 mm, and the diameter of the holes of the grid (9a) of the additional screening device (9) is in the range from 2 to 6 mm, and is preferably approximately equal to 4 mm.

11. Installation according to any one of Claims 8 to 10, **characterized in that** the first zone of the drum (16) has holes with a diameter of approximately 8 mm and the second zone of the drum (16) has holes with a diameter of approximately 10 mm.

## Patentansprüche

1. Verfahren zur Herstellung einer Papierfaserstoffsuspension aus verunreinigungshaltigem Altpapier, wobei das Verfahren die nachstehenden aufeinanderfolgenden Schritte umfasst:
i) einen ersten Schritt des Durchrührens des Papiers in Gegenwart von Wasser, um eine Mischung aus Fasern und Verunreinigungen in Suspension zu erhalten,
ii) einen zweiten Schritt des Grobsiebens der Mischung, um die groben Verunreinigungen vom Rest der Suspension zu trennen, wobei der erste und der zweite Schritt mit Hilfe eines Stofflösers (2) erfolgen, der mit einem rotierenden Mischwerk (2a) ausgerüstet ist und in dem mindestens ein Grobsieb (2b) unter dem rotierenden Mischwerk (2a) angeordnet ist, und
iii) einen dritten Schritt des Feinsiebens, um die feinen Verunreinigungen von der grob gesiebten Suspension, die im Schritt (ii) erhalten wurde, zu trennen,
**dadurch gekennzeichnet, dass** das Verfahren einen vierten Schritt des Waschens der groben und feinen Verunreinigungen umfasst, um die wiederverwertbaren Faserstoffe vom Rest der Verunreinigungen, die nicht wiederverwertbar sind, zu trennen, wobei der Schritt mit Hilfe einer Waschtrommel (16) ausgeführt wird, die zwei aufeinanderfolgende Zonen umfasst, die zumindest an einem Teil ihrer Oberfläche mit Löchern versehen sind,
und **dadurch**, dass die aus der ersten Zone stammenden Waschwässer in eine zwischengeschaltete Mischbütte (6) geschickt werden, in der die grob gesiebte Suspension vor ihrem Feinsieben aufgefangen wird, und die Waschwässer aus der zweiten Zone, die einen geringeren Fasergehalt als die aus der ersten Zone stammenden Waschwässer aufweisen, in den Stofflöser (2) geschickt werden.

2. Verfahren nach Anspruch 1, **dadurch gekennzeichnet, dass** der dritte Schritt mit Hilfe einer Filtrationseinrichtung (9) des Typs "poire de vidange", in deren Innenraum ein Feinsieb (9a) angeordnet ist, ausgeführt wird.

3. Verfahren nach Anspruch 2, **dadurch gekennzeichnet, dass** die Lochweite des Siebrosts (2b) des Stofflösers (2) größer als die Lochweite des Siebrosts (9a) der Filtrationseinrichtung (9) des Typs "poire de vidange", ist, und vorzugsweise mindestens doppelt so groß wie die Lochweite des Siebrosts (9a) der Filtrationseinrichtung (9) des Typs "poire de vidange", ist.

4. Verfahren nach Anspruch 3, **dadurch gekennzeichnet, dass** die Lochweite des Siebrosts (2b) des Stofflösers (2) im Bereich zwischen 8 und 15 mm liegt und vorzugsweise etwa gleich 10 mm ist und die Lochweite des Siebrosts (9a) der Filtrationseinrichtung (9) des Typs "poire de vidange", im Bereich zwischen 2 und 6 mm liegt und vorzugsweise etwa gleich 4 mm ist.

5. Verfahren nach einem der vorhergehenden Ansprüche, **dadurch gekennzeichnet, dass** die erste Zone der Trommel (16) Löcher mit einem Durchmesser von etwa 8 mm aufweist und die zweite Zone der Trommel (16) Löcher mit einem Durchmesser von etwa 10 mm aufweist.

6. Verfahren nach einem der vorhergehenden Ansprüche, **dadurch gekennzeichnet, dass** die während des zweiten und dritten Schritts aussortierten groben und feinen Verunreinigungen in einem Lagertank (14) gesammelt werden, bevor sie gewaschen werden.

7. Verfahren nach einem der vorhergehenden Ansprüche, **dadurch gekennzeichnet, dass** das Altpapier im trockenen Zustand einen Verunreinigungsanteil aufweist, der größer oder gleich 15 Gew.-% ist.

8. Anlage zur Durchführung des Verfahrens nach einem der vorhergehenden Ansprüche, wobei die Anlage umfasst:
- einen Stofflöser (2), der mit einem rotierenden Mischwerk (2a) und einem Siebrost (2b) ausgestattet ist, wobei der Stofflöser (2) dafür bestimmt ist, das Papier in Gegenwart von Wasser durchzurühren, um eine Mischung aus Fasern und Verunreinigungen in Suspension zu erhalten und ein Grobsieben der Mischung durchzuführen, um die groben Verunreinigungen vom Rest der Suspension zu trennen, und
- eine zusätzliche Siebvorrichtung (9) des Typs "poire de vidange", in deren Innenraum ein Feinsieb (9a) angeordnet ist, wobei die zusätzliche Siebvorrichtung (9) dafür bestimmt ist, ein Feinsieben durchzuführen, um die feinen Verunreinigungen von der grob gesiebten Suspension zu trennen,
**dadurch gekennzeichnet, dass** die Anlage umfasst:
- eine zwischengeschaltete Mischbütte (6), um die grob gesiebte Suspension vor ihrem Feinsieben aufzufangen,
- eine Waschtrommel (16), die dafür bestimmt ist, ein Waschen der groben und feinen Verunreinigungen durchzuführen, um die wiederverwertbaren Faserstoffe vom Rest der Verunreinigungen, die nicht wiederverwertbar sind, zu trennen, wobei die Trommel (16) zwei aufeinanderfolgende Zonen umfasst, die zumindest an einem Teil ihrer Oberfläche mit Löchern versehen sind, und
- eine Leitung (7), um die aus der ersten Zone stammenden Waschwässer in die zwischengeschaltete Mischbütte (6) zu schicken, und eine Leitung (3), um die aus der zweiten Zone stammenden Waschwässer, die einen geringeren Fasergehalt als die aus der ersten Zone stammenden Waschwässer haben, in den Stofflöser (2) zu schicken.

9. Anlage nach dem vorhergehenden Anspruch, **dadurch gekennzeichnet, dass** die Lochweite des Siebrosts (2b) des Stofflösers (2) größer als die Lochweite des Siebrosts (9a) der zusätzlichen Siebvorrichtung (9) ist und vorzugsweise mindestens doppelt so groß wie die Lochweite des Siebrosts (9a) der Siebvorrichtung (9) ist.

10. Anlage nach dem vorhergehenden Anspruch, **dadurch gekennzeichnet, dass** die Lochweite des Siebrosts (2b) des Stofflösers (2) im Bereich zwischen 8 und 15 mm liegt und vorzugsweise etwa gleich 10 mm ist und die Lochweite des Siebrosts (9a) der zusätzlichen Siebvorrichtung (9) im Bereich zwischen 2 und 6 mm liegt und vorzugsweise etwa gleich 4 mm ist.

11. Anlage nach einem der Ansprüche 8 bis 10, **dadurch gekennzeichnet, dass** die erste Zone der Trommel (16) Löcher mit einem Durchmesser von etwa 8 mm aufweist und die zweite Zone der Trommel (16) Löcher mit einem Durchmesser von etwa 10 mm aufweist.
